# EUROPÄISCHE PATENTSCHRIFT

(11) **EP 0 790 697 B1**
(45) Veröffentlichungstag und Bekanntmachung des Hinweises auf die Patenterteilung: **21.04.2004**
(21) Anmeldenummer: 97101247.1
(22) Anmeldetag: 28.01.1997
(51) Int. Cl.: H02K 23/18, B25F 5/02, H02K 7/14

(54) **Elektrowerkzeugmaschine mit Umschalteinrichtung für Rechts-/Linkslauf**
Electric machine tool with switching device for clockwise and anti-clockwise operation
Machine-outil électrique avec dispositif de commutation pour marche à droite et à gauche

(30) Priorität: 13.02.1996 DE 19605202
(43) Veröffentlichungstag der Anmeldung: 20.08.1997
(73) Patentinhaber: Atlas Copco Electric Tools GmbH, 71364 Winnenden (DE)
(72) Erfinder: Langhoff, Boris, 71522 Backnang (DE); Vögele, Roland, 71364 Winnenden (DE); Beuthner, Michael, 70199 Stuttgart (DE)
(74) Vertreter: Wasmuth, Rolf, Dipl.-Ing.

(56) Entgegenhaltungen:
- EP-A- 0 208 137
- EP-A- 0 329 249
- EP-A- 0 408 985
- DE-A- 3 404 974
- DE-A- 3 731 079
- DE-A- 3 922 514
- US-A- 3 440 465

## Beschreibung

Die Erfindung betrifft eine Elektrowerkzeugmaschine, insbesondere Bohrhammer oder Schlagbohrmaschine, mit einem an einem Gehäuse ausgebildeten Pistolenhandgriff, in dessen dem Gehäuse nahen Bereich ein Ein-Ausschalter vorgesehen ist und mit einer Umschalteinrichtung für Rechts-/Linkslauf, die einen Bürstenhalter bildenden, den Kollektor des Motors umgreifenden Schaltring aufweist.

Eine derartige Elektrowerkzeugmaschine ist in der DE 37 31 079 C2 beschrieben. Am zur Drehrichtungsumkehr schwenkbaren Schaltring sind zwei um 180° versetzte Bürstenhalter für einem Kollektor des Elektromotors zugeordnete Kohlebürsten vorgesehen. Die Bürstenhalter überragen wegen der notwendigen Länge der in sie einzusetzenden Kohlebürsten den Schaltring radial. Der eine Bürstenhalter ragt nach unten zum Pistolenhandgriff. Er beansprucht dort in seinem Schwenkbereich einen freien Bauraum. Einer für die Handhabbarkeit der Maschine an sich günstigen Verkleinerung des Umfangs des Handgriffes sind damit Grenzen gesetzt.

Zur Betätigung des Schaltrings weist dieser nach der DE 37 31 079 C2 zwei Nasen auf, die seitlich oberhalb des Pistolenhandgriffes aus dem Gehäuse vorstehen. Dieser Bereich eignet sich somit wenig als Griffbereich zum manuellen Aufbringen eines Bohrdruckes.

Aus der DE 34 04 974 C2 ist ein Elektrowerkzeug bekannt, bei dem seitliche Bürstenhalter einander diagonal gegenüberliegen. Die Bürstenhalter sind im Gehäuse nicht schwenkbar. Eine Umkehranordnung ist von den Bürstenhaltern mechanisch getrennt schwenkbar angeordnet. Für die schwenkbare Umkehranordnung ist eine besondere Lagerung im Gehäuse erforderlich. Diese beansprucht einen zusätzlichen Bauraum.

In der US-PS 3 440 465 ist eine Elektrowerkzeugmaschine mit einer weiteren Umschalteinrichtung beschrieben. Die Umschalteinrichtung ist oberhalb des Pistolenhandgriffes angeordnet; überragt diesen jedoch nach hinten. Der eine Bürstenhalter liegt bezogen auf den unterhalb des Kollektors des Motors angeordneten Pistolenhandgriff oberhalb des Kollektors, also nicht seitlich. Mit dieser Anordnung läßt sich ein ergonomisch günstiger Aufbau kaum erreichen.

Die Drehrichtungsumschaltung eines Universalmotors durch einen bürstentragenden Schaltring ist auch in der EP 0 208 137 B1 und der DE 39 43 651 C2 beschrieben.

Eine Einrichtung zur Verbesserung der Kühlung des Kollektors des Motors eines handgeführten Blektrowerkzeugs ist aus der DE 39 22 514 A1 bekannt,

Eine weitere Elektrowerkzeugmaschine gemäß des Stands der Technik ist durch das Dokument EP-A-0 329 249 bekannt.

Aufgabe der Erfindung ist es, eine Blektrowerkzeugmaschine der eingangs genannten Art vorzuschlagen, deren Handhabbarkeit verbessert und deren Preis reduziert ist.

Erfindungsgemäß ist obige Aufgabe durch die Merkmale des Anspruchs 1 gelöst.

Durch die im Gehäuse seitliche Lage der Bürstenhalter ist erreicht, daß keiner der Bürstenhalter bzw. dessen Schwenkbereich in dem Pistolenhandgriff Bauraum beansprucht. Der Pistolenhandgriff kann dadurch auch in seiner oberen Zone, in der er in das Gehäuse übergeht und in der ein Schalterdrücker des Ein-Ausschalters vorgesehen ist, einen kleinen, ergonomisch leicht umgreifbaren Umfang aufweisen. Da der Mindestabstand zwischen dem Kollektor des Motors und dem Ein-Ausschalter nicht durch die Länge der Kollektorbürste begrenzt ist, kann der Schalterdrücker nahe dem Kollektor vorgesehen sein und damit der Pistolenhandgriff bis nahe an die Motorwelle reichen, was ebenfalls die Handhabbarkeit verbessert. Damit ist eine ergonomische Gestaltung für den Fall erreicht, daß die Maschine am Pistolenhandgriff (Untergriff) gefaßt wird, wobei in diesem Fall der Schalterdrücker mit dem Zeigefinger betätigbar ist.

Auch für den anderen Fall (Obergriff), in dem die Maschine von hinten erfaßt wird, um für ein Bohren, insbesondere Schlagbohren, drehachsnah einen manuellen Druck in Richtung der Bohrstelle aufzubringen, ist die Handhabbarkeit ergonomisch verbessert; und zwar durch den balligen Griffbereich des Gehäuses, der innenseitig die in den Bürstenhaltern sitzenden, den Schaltring seitlich überragenden Kohlbürsten aufnimmt und außenseitig eine ergonomische Berührungsfläche für den Handballen bildet. In diesem Fall (Obergriff) ist der Schalterdrücker mit dem kleinen Finger oder dem Ringfinger betätigbar.

Das Rechts-Linkslauf-Betätigungsglied des Schaltrings, das zwischen den Bürstenhaltern angeordnet ist, ist auf der dem Pistolenhandgriff gegenüberliegenden Oberseite des Gehäuses bedienbar. Dadurch ist vermieden, daß das Betätigungsglied dem Obergriff im Wege steht und beim Obergriff versehentlich betätigt wird. Es ist erreicht, daß an der Oberseite des Gehäuses die Stellung des Betätigungsgliedes gut sichtbar ist und das Betätigungsglied übersichtlich bedienbar ist.

In bevorzugter Weiterbildung der Erfindung ist der Schaltring an einem Träger schwenkbar, schraubenlos gehalten, der an dem Feld des Motors schraubenlos fixiert ist, wobei der Schaltring und der Träger Kunststoff teile sind. Dadurch ist erreicht, daß der Schaltring und damit die Bürstenhalter dem Feld des Motors und dem Kollektor ohne weiteres lagerichtig zugeordnet sind. Für die Umschaltungsrichtung sind nur zwei Kunststoffteile, nämlich der Schaltring und der Träger erforderlich, was zu einer erheblichen Reduzierung des Herstellungsaufwandes hinsichtlich Teilekosten und Montagekosten führt. Der Schaltring erfüllt mehrere Funktionen, indem er die Bürstenhalter, das Betätigungsglied und gegebenenfalls eine unten näher beschriebene Sperreinrichtung bildet. Der Träger erfüllt mehrere Funktionen, indem er einerseits die lagerichtige Zuordnung zum Feld des Motors und andererseits die schwenkbare Lagerung des Schaltrings bildet. Schrauben und eine Befestigung der Umschalteinrichtung am Gehäuse der Maschine erübrigen sich.

Weitere vorteilhafte Ausgestaltungen der Erfindung ergeben sich aus den Unteransprüchen und der folgenden Beschreibung eines Ausführungsbeispiels. In der Zeichnung zeigen:
Figur 1 eine Schlagbohrmaschine im Teilschnitt,
Figur 2 eine Seitenansicht der Schlagbohrmaschine mit ihrem balligen Griffbereich,
Figur 3 eine Aufsicht der Schlagbohrmaschine,
Figur 4 einen Schnitt längs der Linie IV-IV nach Fig. 1 mit dem Schaltring in Linksstellung,
Figur 5 eine Fig. 4 entsprechende Ansicht mit dem Schaltring in Mittelstellung,
Figur 6 den Schaltring am Feld des Motors befestigt und
Figur 7 eine Teilansicht in Richtung der Pfeile VII nach Fig. 6.

Am vorzugsweise zweischaligen Gehäuse(1) der Schlagbohrmaschine ist ein Pistolenhandgriff(2) ausgebildet. Im Pistolenhandgriff(2) ist ein Ein-Ausschalter(3) angeordnet, der mittels eines Schalterdrückers(4) betätigbar ist. Der Schalterdrücker (4) ist im Inneneckbereich des Pistolenhandgriffes(2) erreichbar.

Im Gehäuse(1) ist ein Elektromotor(5) befestigt. Dessen an einem Wälzlager(6) gelagerte Welle(7) trägt ein Blechpaket(8) mit Ankerwicklung(9), einen Kollektor(10), einen Lüfterflügel(11) und ein nicht näher dargestelltes Antriebsritzel für ein Getriebe. Das Blechpaket(8) liegt innerhalb des Feldes(12) des Motors(5), wobei im Spalt Feldnuten(13) bestehen. Das Getriebe treibt eine Arbeitsspindel(14) der Maschine an und ist mittels eines Schiebers(15) von Bohren auf Schlagbohren umschaltbar.

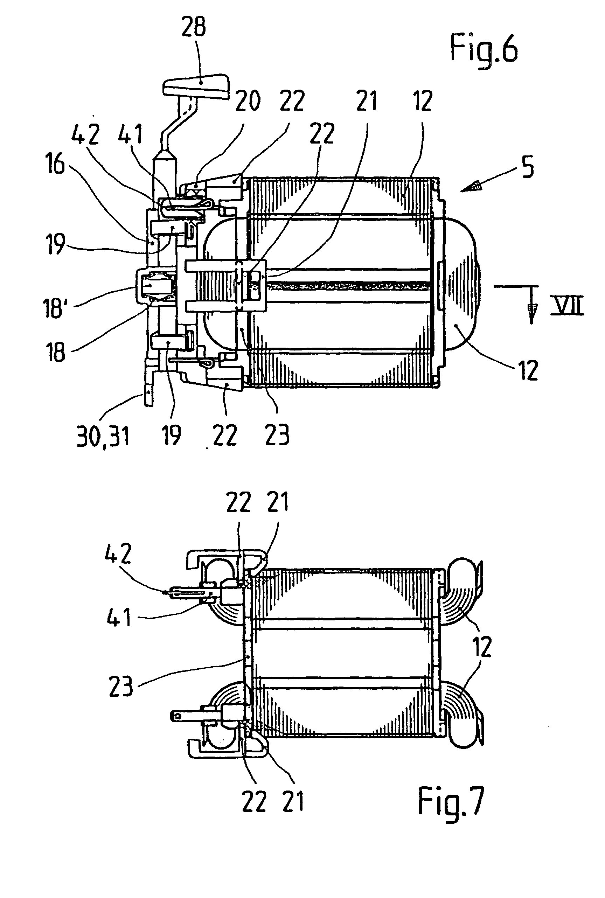

Den Kollektor(10) umschließt ein Schaltring(16) aus Kunststoff, an dem zwei um 180° versetzte Bürstenhalter(17,18) ausgebildet sind, die den Schaltring(16) radial überragen. Der Schaltring(16) ist mittels mehrerer ihn an seinem Umfang übergreifenden, schnappbaren Haken(19) eines Trägers(20) an diesem um die Welle(7) schwenkbar gehalten. Der Träger(20) besteht ebenfalls aus Kunststoff und ist mittels Schnappnasen(21) und Abstandhaltern(22) an einer Feldendscheibe(23) des Motors(5) axial, radial und unverdrehbar fixiert (vgl. Fig. 6,7), was vor allem im Schlagbetrieb Korrosionen zwischen elektrischen Kontakten verhindert, die das Feld(12) mit den in den Bürstenhaltern(17,18) geführten Bürsten verbinden.

Die Haken(19) des Trägers(20) bilden im Zusammenwirken mit den Bürstenhaltern(17,18) oder entsprechenden Anformungen des Schaltrings(16) Anschläge zur Begrenzung der Schwenkbewegung des Schaltrings(16) gegenüber dem Träger(20).

In den Träger(20) sind als elektrische Kontakte zwei Schneidklemmen(42) eingesetzt, die auf Stecker(41) der Wicklung des Feldes(12) aufgesteckt sind (vgl. Fig.6,7). Die Schneidklemmen(42) kontaktieren oder bilden zwei im Träger(20) angeordnete, nicht näher dargestellte Kontaktbahnen, auf denen zwei Kontaktelemente(18') (vgl. Fig.6) der Bürstenhalter(17,18) beim Verschwenken des Schaltrings (16) verschieblich sind. Für die Verwirklichung der Umpolung zur Drehrichtungsumschaltung sind also nur sehr wenige, beispielsweise 4, elektrische Metallteile nötig. Die Montage der Umschalteinrichtung am Motor(5) ist einfach. Durch das Anschnappen des Schaltrings(16) an die Haken(19) des Trägers(20) ergibt sich die notwendige mechanische und elektrische Verbindung zum Träger(20). Durch das Aufschnappen des Trägers(20) auf das Feld(12) des Motors (5) ergibt sich nicht nur die gewünschte mechanische Verbindung, sondern auch über die Schneidklemmen(42) gleichzeitig die elektrische Verbindung.

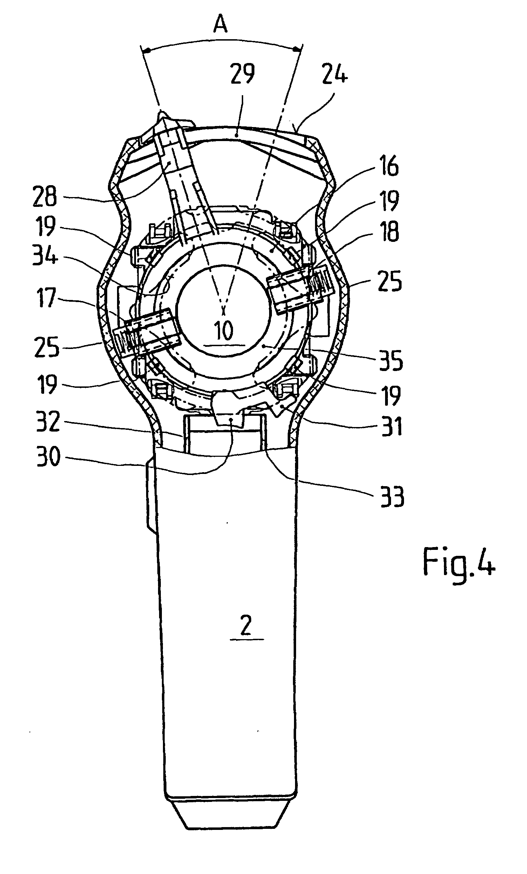

Durch das Schwenken des Schaltrings(16) im Schwenkbereich (A) (vgl. Fig. 4) und damit der in den Bürstenhaltern (17,18) sitzenden Bürsten erfolgt in an sich bekannter Weise eine Polumschaltung des Elektromotors und damit eine Drehrichtungsumschaltung.

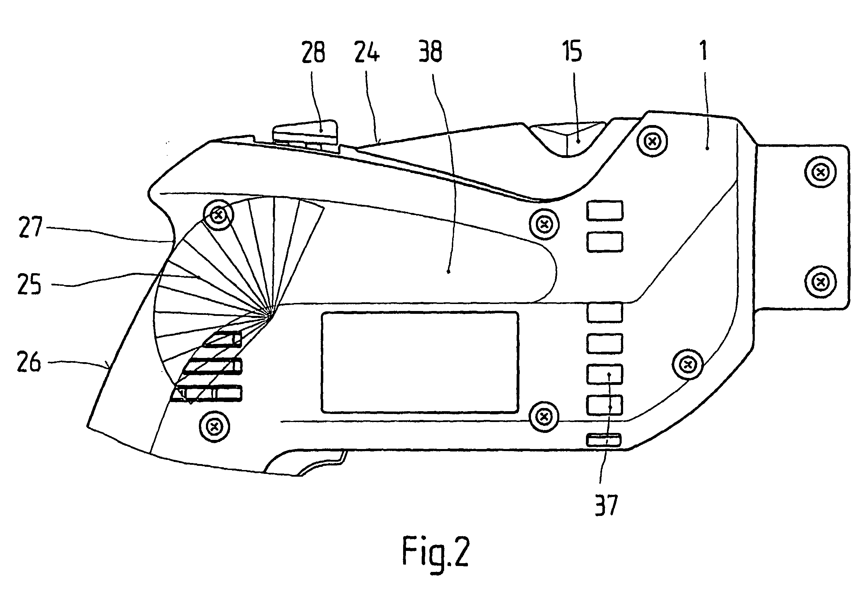

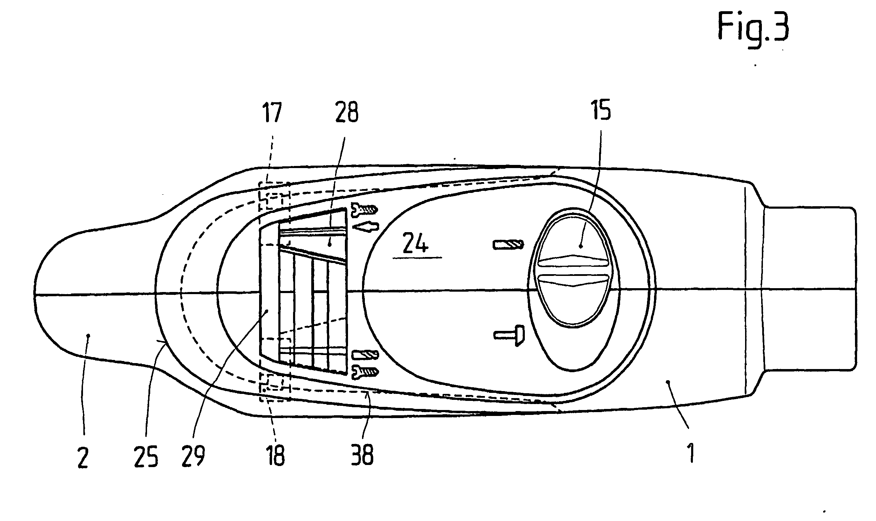

Die Bürstenhalter(17,18) und ihre Schwenkbereiche liegen im Gehäuse(1) oberhalb des Pistolenhandgriffes(2) seitlich. Sie ragen also in keiner Schwenkstellung nach unten zum Pistolenhandgriff(2) und nach oben zur Oberseite(24) des Gehäuses(1). Im Schwenkbereich der Bürstenhalter(17,18) bildet das Gehäuse(1) zur Aufnahme der Bürstenhalter(17,18) und der Bürsten einen ballig erweiterten Griffbereich(25) (vgl. Fig. 2,3,4), der sich zur Rückseite(26) des Gehäuses(1) verjüngt. An der Rückseite(26) ist oberhalb des Pistolenhandgriffes(2) und oberhalb des balligen Griffbereichs(25) eine Kuhle(27) gestaltet.

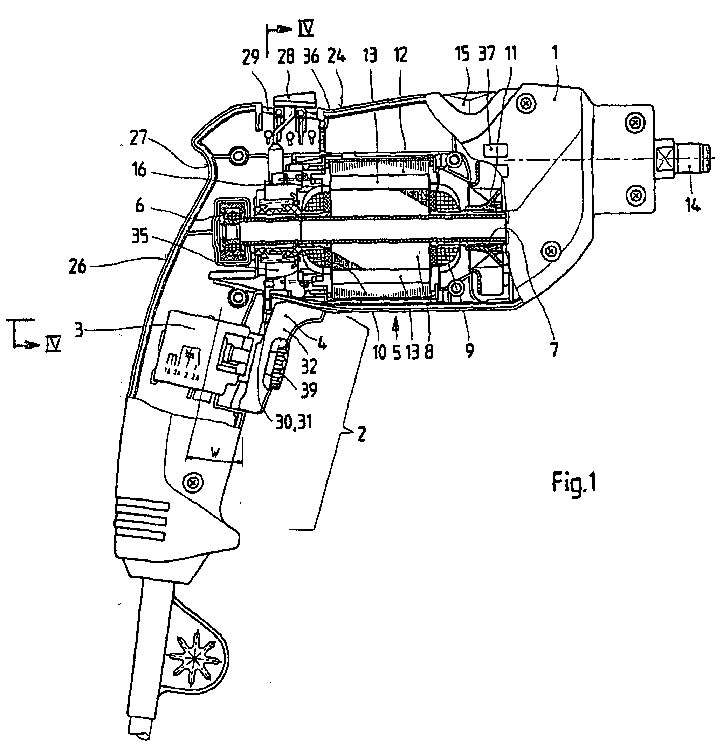

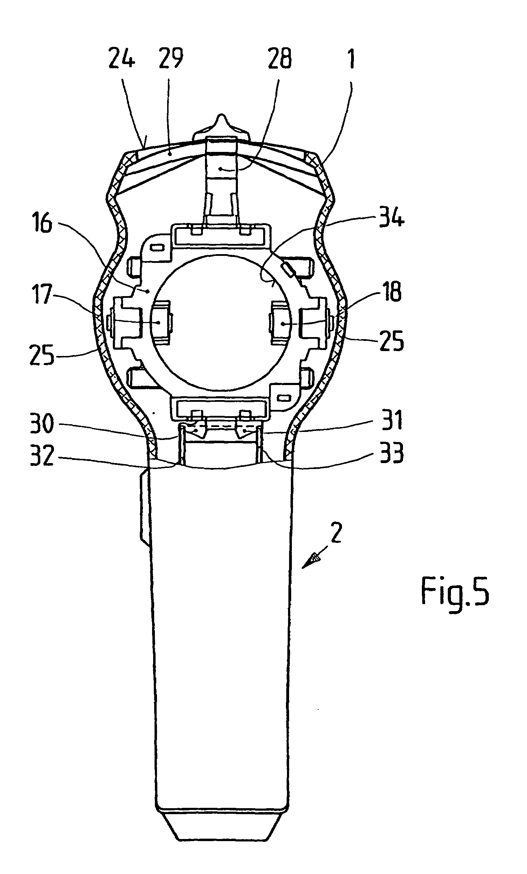

Am Schaltring(16) ist zu dessen Verschwenkung im Schwenkbereich(A) ein Betätigungsglied(28) ausgebildet, das eine Schlitzung(29) der Oberseite(24) des Gehäuses(1) durchragt. Unterseitig sind am Schaltring(16) Sperrnasen (30,31) vorgesehen, die im Zusammenwirken mit zwei Wandungen(32,33) des Schalterdrückers(4) (vgl. Fig. 1,4,5) verhindern, daß im eingeschalteten Zustand des Motors(5), also bei betätigtem Schalterdrücker(4), der Schaltring(16) von der einen Drehrichtung in die andere Drehrichtung umgeschaltet werden kann und daß in der Mittelstellung des Schaltrings(16) (vgl. Fig. 5) der Schalterdrücker(4) betätigt werden kann. Im Linkslauf steht die Sperrnase (30) zwischen den Wandungen(32,33) des betätigten Schalterdrückers(4) (vgl. Fig. 4), so daß die Wandungen (32,33) ein Verschwenken in Rechtslaufstellung sperren. Im Rechtslauf steht die Sperrnase(31) zwischen den Wandungen(32,33) des betätigten Schalterdrückers(4), so daß die Wandungen(32,33) ein Verschwenken in Linkslaufstellung sperren. In Mittelstellung des Schaltrings(16) finden die Wandungen(32,33) des Schalterdrückers(4) einen Anschlag an den Sperrnasen (30,31), so daß die Maschine nicht eingeschaltet werden kann. Nur wenn der Schaltschieber in abgeschaltetem Zustand der Maschine in Rechtslaufstellung oder Linkslaufstellung gebracht ist, läßt sich der Schalterdrücker(4) eindrücken.

Der Schaltring(16) bildet eine den Kollektor(10) im Abstand umschließende Luftführungshülse(34), wobei der Abstandsraum(35) einerseits zu der Schlitzung(29) und andererseits zu den Feldnuten(13) offen ist. Ein inneres Gehäusewandteil(36) verhindert einen unter Umgehung des Abstandsraumes(35) direkt von der Schlitzung(29) zum Lüfterflügel(11) ziehenden Luftstrom. Die vom rotierenden Lüfterflügel(11) geförderte Kühlluft streicht dadurch mit hoher Kühlluftgeschwindigkeit unmittelbar über den Kollektor(10), was den Bürstenverschleiß verringert und die Motorleistung verbessert. Die Kühlluft strömt über Gehäuseöffnungen(37) aus.

Infolge der seitlichen Anordnung der Bürstenhalter(17,18) ist es möglich, den Umfang des Pistolenhandgriffes(2) - auch im Bereich des Schalterdrückers(4) - ergonomisch klein zu gestalten, so daß der Pistolenhandgriff(2) gut umfaßt werden kann. Außerdem ist es möglich, den Ausstellwinkel(W) des Pistolenhandgriffes(2) ergonomisch groß zu wählen, so daß die Hand des Benutzers in natürlicher Haltung die Maschine nahe der Motorwelle(7) stützt und sie zwanglos senkrecht zur Bohrstelle oder Schraubstelle führt. In dieser Haltung der Maschine (Untergriff) liegt der Zeigefinger der Hand des Benutzers am Schalterdrücker(4).

Im balligen Griffbereich(25) findet der Handballen des Benutzers, wenn die Maschine im Obergriff gefaßt wird, eine ergonomische Auflage, so daß ein hoher Bohr- bzw. Schlagbohrdruck oder Schraubdruck ermüdungsfrei auf die Maschine ausgeübt werden kann. Beim Obergriff übergreifen der kleine Finger oder der Ringfinger der Hand des Benutzers den Schalterdrücker(4) und der Handbereich zwischen Daumen und Zeigefinger liegt in der Kuhle(27), was durch den ergonomisch, handgerecht kleinen Abstand zwischen der Kuhle(27) und dem Schalterdrücker(4) möglich ist. Der Zeigefinger ruht in einer Vertiefung(38) des Gehäuses(1), die an den balligen Griffbereich(25) nach vorn anschließt (vgl. Fig. 2). In einer entsprechenden Vertiefung der anderen Gehäuseseite ruht der Daumen.

Zum Umschalten der Drehrichtung braucht die Maschine nicht abgelegt zu werden. Es wird hierfür einfach mit der anderen Hand - nach dem Loslassen des Schalterdrückers(4) - das an der Oberseite(24) gut sichtbare Betätigungsglied (28) verschoben. Gleiches gilt für die Betätigung des Schiebers(15).

Die Drehrichtungsumschaltung ist nicht nur für den Bohr- bzw. Schlagbohrbetrieb günstig. Sie gestattet auch das Anziehen und Lösen von Schrauben. Zur Drehzahleinstellung ist in den Schalterdrücker(4) ein Einstellrad(39) integriert.

## Patentansprüche

1. Elektrowerkzeugmaschine, insbesondere Bohrhammer oder Schlagbohrmaschine, mit einem am Gehäuse(1) ausgebildeten Pistolenhandgriff(2), in dessen dem Gehäuse(1) nahen Bereich ein Ein-Ausschalter(3) vorgesehen ist, und mit einer Umschalteinrichtung für Rechts-/Linkslauf, die einen Bürstenhalter(17,18) bildenden, oberhalb des Ein-Ausschalters(3) den Kollektor des Motors umgreifenden Schaltring(16) aufweist, welcher zum Umschalten der Drehrichtung mittels eines Betätigungsgliedes(28) schwenkbar ist, **dadurch gekennzeichnet, daß** die Bürstenhalter (17,18) und ihr Schwenkbereich oberhalb des Pistolenhandgriffes(2) im Gehäuse(1) seitlich liegen, die Bürstenhalter(17,18) von einem ballig geformten Griffbereich(25) des Gehäuses(1) umfaßt sind, das Betätigungsglied(28) des Schaltrings(16) auf der dem Pistolenhandgriff(2) gegenüberliegenden Oberseite (24) des Gehäuses(1) bedienbar ist und der Schaltring(16) eine zwischen den Bürstenhaltern(17,18) vorgesehene, dem Schalterdrücker(4) zugeordnete Sperreinrichtung(30,31) aufweist, die eine Drehrichtungsumschaltung bei betätigtem Schalterdrücker(4) verhindert.

2. Elektrowerkzeugmaschine nach Anspruch 1,
**dadurch gekennzeichnet,**
**daß** ein Träger(20) für den Schaltring(16) an dem Feld(12) des Motors(5) schraubenlos fixiert ist.

3. Elektrowerkzeugmaschine nach Anspruch 2,
**dadurch gekennzeichnet,**
**daß** der Schaltring(16) und der Träger(20) je einstückige Kunststoffteile sind.

4. Elektrowerkzeugmaschine nach einem der vorhergehenden Ansprüche,
**dadurch gekennzeichnet,**
**daß** der Schaltring(16) zwei Sperrnasen(30,31) und der Schalterdrücker(4) zwei Wandungen(32,33) aufweist, wobei bei betätigtem Schalterdrücker(4) und eingeschaltetem Rechts- bzw. Linkslauf die eine oder andere Sperrnase (30 bzw. 31) zwischen den Wandungen(32,33) steht und bei nicht eingestelltem Rechts- oder Linkslauf die Wandungen (32,33) auf die Sperrnasen(30,31) treffen, um ein Einschalten des Motors(5) zu verhindern.

5. Elektrowerkzeugmaschine nach einem der vorhergehenden Ansprüche,
**dadurch gekennzeichnet,**
**daß** sich an den balligen Griffbereich(25) eine Vertiefung (38) des Gehäuses(1) zur Fingeraufnahme anschließt.

6. Elektrowerkzeugmaschine nach einem der vorhergehenden Ansprüche,
**dadurch gekennzeichnet,**
**daß** an der Rückseite(26) des Gehäuses(1) oberhalb des balligen Bereiches(25) eine Kuhle(27) ausgebildet ist.

7. Elektrowerkzeugmaschine nach einem der vorhergehenden Ansprüche,
**dadurch gekennzeichnet,**
**daß** das Betätigungsglied(28) des Schaltrings(16) durch eine der Kühlluftzuführung dienende Schlitzung(29) geführt ist.

8. Elektrowerkzeugmaschine nach einem der vorhergehenden Ansprüche,
daß der Schaltring(16) eine Luftführungshülse(34) aufweist, die um den Kollektor(16) einen kühlluftführenden Abstandsraum(35) bildet, und daß ein inneres Gehäusewandteil(36) vorgesehen ist, das einen den Abstandsraum(35) umgehenden Luftstrom verhindert.

9. Elektrowerkzeugmaschine nach einem der vorhergehenden Ansprüche,
**dadurch gekennzeichnet,**
**daß** am Träger(20) zwei Schneidklemmen(42) angeordnet sind, die auf Stecker(41) der Wicklung des Feldes(12) steckbar sind.

## Claims

1. Electrical machine tool, particularly a hammer drill or percussion drill with a handhold (2), developed on the housing (1), with an on/off switch in the pistol handhold area close to the housing (1), with a reversing device, for changing over between clockwise and anticlockwise running, which has a switch ring (16), forming a brush holder (17, 19) and surrounding the motor commutator, placed over the on/off switch, the said switch ring (16) being able to rotate in order to change the direction of rotation by means of an operating member (28),
**characterized in that** the brush holder (17, 18) and its rotation range lie laterally above the handhold (2) in the housing (1), the brush holders (17, 18) are surrounded by a spherically clasping area (25) of the housing (1), the operating member (28) of the switch ring (16) can be operated on the upper side lying opposite the pistol handhold (2) and the switch ring (16) has a power interruption device (30, 31) associated with the switch trigger (4), between the brush holders (17, 18), which prevents changing over of the direction of rotation while the switch trigger (4) is actuated.

2. Electrical machine tool in accordance with claim 1,
**characterized in that**
a support (20) for the switch ring (16) is fixed, free of bolts, to the section (12) of the motor (5).

3. Electrical machine tool in accordance with claim 2,
**characterized in that**
the switch ring (16) and the support (20) are both single pieces made of synthetic material.

4. Electrical machine tool in accordance with one of the preceding claims,
**characterized in that**
the switch ring (16) has two stops (30, 31) and the switch trigger (4) has two faces (32, 33), whereby one of the two stops (30 or 31) is positioned between the two faces (32, 33) when the clockwise/anticlockwise setting is switched on, and, when the clockwise/anticlockwise setting is not on, the faces (32, 33) meet on the stops (30, 31), preventing switching-on ofthe motor (5).

5. Electrical machine tool in accordance with one of the preceding claims,
**characterized in that**
a recess (38), for fingers, in the housing (1), adjoins the spherical gripping area (25).

6. Electrical machine tool in accordance with one of the preceding claims,
**characterized in that**
a pit (27) is developed on the rear side (26) of the housing (1), above the spherical area (25).

7. Electrical machine tool in accordance with one of the preceding claims,
**characterized in that**
the operating member (28) of the switch ring (16) is guided by slotting (29) serving to guide cooling air.

8. Electrical machine tool in accordance with one of the preceding claims,
**characterized in that**
the switch ring (16) has an air circulation casing (34) that forms a gap (35), around the commutator (16), which guides cooling air, and **in that** there is an inner housing face section (36) which checks a flow of air that flows through the gap (35).

9. Electrical machine tool in accordance with one of the preceding claims,
**characterized in that**
two cutting clips (42), which can be placed on the plug (41) of the winding of the section (12), are disposed on the support (20).

## Revendications

1. Machine électroportative, notamment marteau perforateur ou perceuse à percussion, comprenant une poignée (2) en forme de pistolet formée sur le carter (1) et dans la zone de laquelle, qui est proche du carter (1), est prévu un commutateur marche/arrêt (3), et comprenant également un dispositif d'inversion pour marche à droite/marche à gauche présentant une bague de commande (16) qui forme un support de balais (17, 18) entourant le collecteur du moteur au-dessus du commutateur marche/arrêt (3), et que l'on peut faire pivoter, pour inverser le sens de rotation, au moyen d'un organe d'actionnement (28),
**caractérisée en ce que** les supports de balais (17, 8) et leur zone de pivotement se situent au-dessus de la poignée en forme de pistolet (2), latéralement dans le carter (1), les supports de balais (17, 18) sont entourés par une zone de préhension (25) du carter (1) de forme bombée, l'organe d'actionnement (28) de la bague de commande (16) peut être manoeuvré sur le côté supérieur (24) du carter (1), opposé à la poignée (2) en forme de pistolet, et la bague de commande (16) présente un dispositif de verrouillage (30, 31) qui est prévu entre les supports de balais (17, 18), est associé au bouton poussoir de commutateur (4), et empêche une inversion de sens de rotation lorsque le bouton poussoir de commutateur (4) est actionné.

2. Machine électroportative selon la revendication 1, **caractérisée en ce qu'**un support (20) pour la bague de commande (16) est fixé sans vis à l'inducteur (12) du moteur (5).

3. Machine électroportative selon la revendication 2, **caractérisée en ce que** la bague de commande (16) et le support (20) sont des pièces en matière plastique, chacune d'un seul tenant.

4. Machine électroportative selon l'une des revendications précédentes, **caractérisée en ce que** la bague de commande (16) présente deux talons de verrouillage (30, 31) et le bouton poussoir de commutateur (4) deux parois (32, 33), la configuration étant telle, que lorsque le bouton poussoir de commutateur (4) est actionné et que la marche à droite ou respectivement la marche à gauche est activée, l'un ou l'autre talon de verrouillage (30 respectivement 31) se situe entre les parois (32, 33), et que lorsque la marche à droite ou la marche à gauche n'est pas activée, les parois (32, 33) tombent sur les talons de verrouillage (30, 31) pour empêcher une mise en marche du moteur (5).

5. Machine électroportative selon l'une des revendications précédentes, **caractérisée en ce qu'**à la zone de préhension bombée (25) se raccorde un renfoncement (38) du carter (1), pour recevoir un doigt.

6. Machine électroportative selon l'une des revendications précédentes, **caractérisée en ce que** sur le côté arrière (26) du carter (1), au-dessus de la zone bombée (25), est formé un creux (27).

7. Machine électroportative selon l'une des revendications précédentes, **caractérisée en ce que** l'organe d'actionnement (28) de la bague de commande (16) est menée et guidée à travers une fente (29) servant à l'amenée d'air de refroidissement.

8. Machine électroportative selon l'une des revendications précédentes, **caractérisée en ce que** la bague de commande (16) comporte un manchon de guidage d'air (34), qui forme autour du collecteur (16), une chambre d'espacement (35) conduisant l'air de refroidissement, et **en ce qu'**il est prévu une partie de paroi de carter intérieure (36), qui empêche un écoulement d'air contournant la chambre d'espacement (35).

9. Machine électroportative selon l'une des revendications précédentes, **caractérisée en ce que** sur le support (20) sont disposées deux bornes coupantes (42) qui peuvent être emmanchées sur des fiches (41) de l'enroulement de l'inducteur (12).
